(19) Europäisches Patentamt
European Patent Office
Office européen des brevets

(11) Veröffentlichungsnummer : **0 159 549**
**B1**

(12) **EUROPÄISCHE PATENTSCHRIFT**

(45) Veröffentlichungstag der Patentschrift : **08.07.87**

(51) Int. Cl.⁴ : **C 09 B 44/06**

(21) Anmeldenummer : **85103384.5**

(22) Anmeldetag : **22.03.85**

(54) **Basische Azofarbstoffe.**

(30) Priorität : **06.04.84 DE 3413022**

(43) Veröffentlichungstag der Anmeldung : **30.10.85 Patentblatt 85/44**

(45) Bekanntmachung des Hinweises auf die Patenterteilung : **08.07.87 Patentblatt 87/28**

(84) Benannte Vertragsstaaten : **CH DE FR GB IT LI**

(56) Entgegenhaltungen :
**DE-A- 2 050 246**
**FR-A- 1 169 603**
**US-A- 2 219 280**

(73) Patentinhaber : **BASF Aktiengesellschaft**
**Carl-Bosch-Strasse 38**
**D-6700 Ludwigshafen (DE)**

(72) Erfinder : **Colberg, Horst, Dr.**
**Tilsiter Strasse 9**
**D-6707 Schifferstadt (DE)**

**EP 0 159 549 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft Verbindungen der allgemeinen Formel I

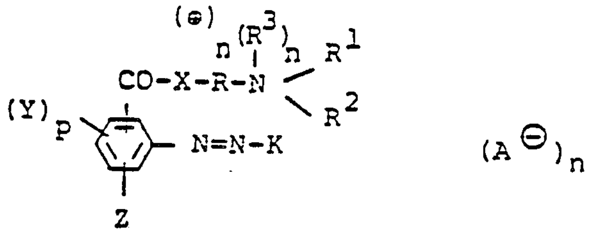

in der

Y Wasserstoff, Chlor, Brom oder Nitro,

Z Wasserstoff, Chlor, Brom, Sulfonsäureester oder gegebenenfalls substituiertes Sulfamoyl,

X —O— oder

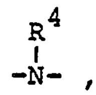

R gegebenenfalls durch Sauerstoff oder

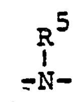

unterbrochenes Alkylen,

n die Zahlen 0 oder 1,

p die Zahlen 1 oder 2,

$R^1$ und $R^2$ unabhängig voneinander Wasserstoff, gegebenenfalls substituiertes Alkyl, Alkenyl, Cycloalkyl, Aralkyl oder Aryl oder

$R^1$ und $R^2$ zusammen mit dem Stickstoff einen Heterocyclus,

$R^3$ Wasserstoff oder gegebenenfalls substituiertes Alkyl,

K der Rest einer Kupplungskomponente der Naphtholreihe

und

$A^\ominus$ ein Anion sind, wobei

$R^4$ gegebenenfalls substituiertes Alkyl und

$R^5$ Wasserstoff oder $C_1$- bis $C_4$-Alkyl sind und der Rest

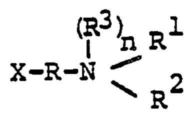

auch einen gegebenenfalls substituierten Piperazinrest bedeutet.

Einzelne Reste Z sind neben den bereits genannten z. B.

$SO_2NH_2$, $SO_2NHCH_3$, $SO_2NHC_2H_5$, $SO_2NHC_3H_7$, $SO_2NHC_4H_9$, $SO_2NHC_6H_5$, $SO_2N(CH_3)_2$, $SO_2N(C_2H_5)_2$, $SO_2N(C_3H_7)_2$, $SO_2N(C_4H_9)_2$, $SO_2NHC_2H_4OH$, 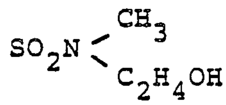, $SO_2N(C_2H_4OH)_2$, $SO_2OCH_2CH_2N(CH_3)_2$, $SO_2OC_2H_4N(C_2H_5)_2$, $SO_2OC_2H_4N(C_4H_9)_2$, $SO_2OC_2H_4N(CH_2CH_2)_2O$, $SO_2OCH(CH_3)CH_2N(CH_3)_2$, $SO_2OCH(CH_3)CH_2N(C_2H_5)_2$, $SO_2OC_4H_8N(CH_3)_2$ oder $SO_2OC_4H_8N(C_2H_5)_2$.

Für Z sind Wasserstoff, Chlor oder Brom besonders bevorzugt.

Gegebenenfalls substituierte Alkylenreste R haben z. B. 2 bis 10 C-Atome, bevorzugt sind $C_2$- oder $C_3$-Reste.

Im einzelnen sind beispielsweise zu nennen :

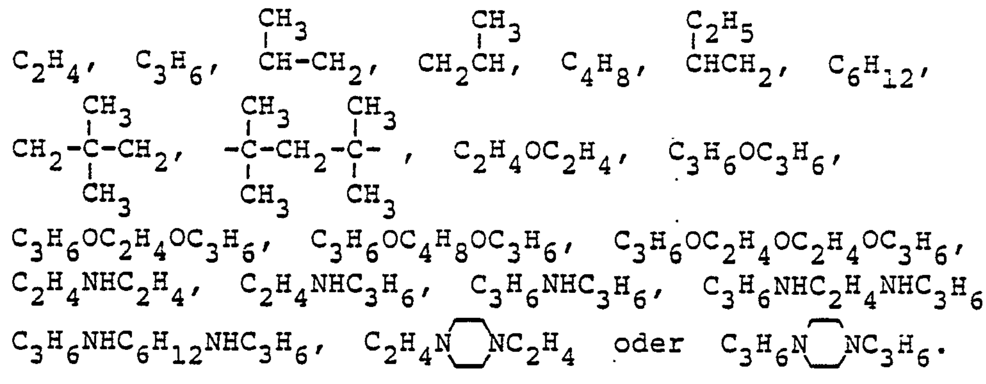

Alkylreste $R^1$ und $R^2$ haben in der Regel 1 bis 14 C-Atome und können z. B. durch N-Cycloalkylamino, N,N-Di-$C_1$- bis -$C_5$-alkylamino, Hydroxy oder $C_1$- bis $C_8$-Alkoxy substituiert sein. Ferner sind Allyl, Methallyl oder $C_5$- bis $C_8$- Cycloalkyl zu erwähnen.

Im einzelnen seien beispielsweise neben den bereits aufgeführten folgende Reste genannt :

Methyl, Ethyl, n-Propyl, i-Propyl, n-Butyl, i-Butyl, n-Amyl, i-Amyl, n-Hexyl, i-Hexyl, Heptyl, Octyl, 2-Ethylhexyl, Decyl, Dodecyl, Tridecyl, Tetradecyl, 2-Hydroxyethyl, 2- oder 3-Hydroxypropyl, Hydroxybutyl, Cyclopentyl, Cyclohexyl oder Cyclooctyl, N,N-Dimethylaminoethyl, N,N-Diethylaminoethyl, N,N-Dipropylaminoethyl, N,N-Dibutylamino-ethyl, 3-(N,N-Dimethylamino)-propyl, 3-(N,N-Diethylamino)-propyl, 3-(N,N-Dipropylamino)-propyl oder 3-(N,N-Dibutylamino)-propyl, N-Cyclohexylaminoethyl, 3-(N-Cyclohexylamino)-propyl, 3-(N-Cyclooctylamino)-propyl, N-Methyl-N-cyclohexylaminoethyl, 3-(N-Methyl-N-cyclohexylamino)-propyl, Benzyl, Phenethyl, Phenyl oder Tolyl.

$R^1$ und $R^2$ können zusammen mit dem Stickstoff z. B. die Reste folgender Heterocyclen bilden :

Pyrrolidin, Piperidin, Morpholin, Piperazin, das am Stickstoff durch Methyl, Ethyl, n- und i-Propyl, n-, i-, sec.- Butyl, 2-Hydroxyethyl, 2-Aminoethyl, 2- oder 3-Hydroxypropyl, 2- oder 3-Aminopropyl substituiert sein kann, Imidazol, das in 2- und/oder 4-Stellung durch Methyl, Ethyl, Propyl oder Butyl substituiert sein kann oder N-3-($C_1$- bis $C_{12}$)-Alkyl- oder Vinyl-imidazol, das in 2- und/oder 4-Stellung noch durch Methyl, Ethyl, Propyl oder Butyl substituiert sein kann.

Der Rest

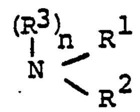

kann auch eine Gruppe der Formel

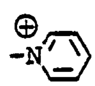

sein.

. Für $R^3$ kommen daneben z. B. $C_1$- bis $C_{12}$-Alkyl oder $C_2$- bis $C_4$-Hydroxyalkyl wie Methyl, Ethyl, n- oder i-Propyl, n- oder i-Butyl, n- oder i-Amyl, n- oder i-Hexyl, Octyl, 2-Ethylhexyl, Decyl, Dodecyl, 2-Hydroxyethyl, 2- oder 3-Hydroxypropyl, Hydroxybutyl, Benzyl, $CH_2CH_2(OH)CH_2Cl$ oder $CH_2CH(OH)CH_2OH$ in Betracht.

Vorzugsweise steht $R^3$ für $C_1$- bis $C_4$-Alkyl, $C_2$- bis $C_4$-Hydroxyalkyl oder Benzyl.

Für $R^3$ sind Methyl, Ethyl, $C_2$- und $C_3$-Hydroxyalkyl besonders bevorzugt.

Für $R^4$ sind vorzugsweise $CH_3$, $C_2H_5$ und $C_2H_4OH$ zu nennen.

Als Kupplungskomponenten K sind α-Naphthol, Naphthalindiole, Chlornaphthole, Alkylnaphthole und insbesondere β-Naphthol zu nennen.

Anionen $A^{\ominus}$ sind z. B. : Chlorid, Bromid, Hydrogensulfat, Sulfat, Nitrat, Phosphat, Hydrogenphosphat, Dihydrogenphosphat, Carbonat, Hydrogencarbonat, Tetrachlorozinkat, Aminosulfonat, Methylsulfonat, Methylsulfat, Ethylsulfat, Formiat, Acetat, Hydroxyacetat, Aminoacetat, Methoxyacetat, Propionat, Lactat, Maleinat, Malonat, Citrat, Benzoat, Phthalat, Benzolsulfonat, Toluolsulfonat, Oleat oder Dodecylbenzolsulfonat.

Zur Herstellung der Verbindungen der Formel I kann man z. B. Amine der Formel

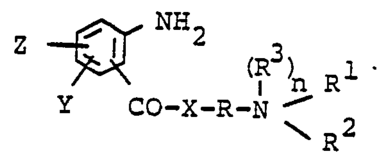

diazotieren und mit einer Kupplungskomponente der Formel

H—K

umsetzen.

Einzelheiten der Herstellung können den Beispielen entnommen werden.

Die Verbindungen der Formel I eignen sich zum Färben von sauer modifizierten Fasern wie Polyacrylnitril oder Polyestern, Leder und insbesondere Papier. Auch läßt sich insbesondere Papier mit Druckfarben bedrucken, die wäßrige Lösungen von Säureadditionssalzen von I enthalten. In Form der Basen oder Salze mit längerkettigen Carbon- oder Sulfonsäuren wie Ölsäure oder Dodecylbenzolsulfosäure kommen sie auch z. B. für Kugelschreiberpasten, als Solventfarbstoffe oder für nicht wäßrige Druckfarben in Betracht. Mit entsprechenden Anionen sind die Farbstoffe als Säureadditionssalze auch leicht in Wasser und organischen Lösungsmitteln löslich, so daß sie sich zur Herstellung von flüssigen Konzentraten eignen.

Von besonderer Bedeutung sind Verbindungen der Formel Ia

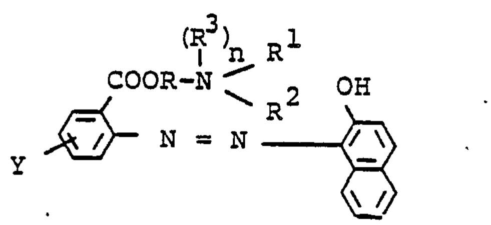

in der R bis $R^3$ und Y die angegebene Bedeutung haben.

Bevorzugt für Y sind dabei Wasserstoff und Nitro und für R $C_2H_4$, $C_3H_6$, $—CH(CH_3)CH_2$ oder $C_4H_8$. $R^1$ und $R^2$ sind vorzugsweise : H, $CH_3$, $C_2H_5$, n—, i—$C_3H_7$, n—, i—, sec.—$C_4H_9$, $C_2H_4OCH_3$,

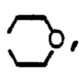, 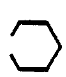, 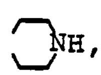,

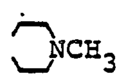, 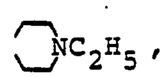, 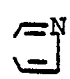

oder Cyclohexyl und $R^3$ $CH_3$, $C_2H_5$, $C_2H_4OH$.

In den folgenden Beispielen beziehen sich Angaben über Teile und Prozente, sofern nicht anders vermerkt, auf das Gewicht.

## Beispiel 1

Herstellung der Diazokomponente : Zu 326 Teilen Isatosäureanhydrid in 1 000 Teilen Dioxan tropft man bei 60 °C 187 Teile Dimethylamino-ethanol zu. Man rührt 1 Stunde nach, engt im Wasserstrahlvakuum ein und destilliert im Feinvakuum. Bei 160 °C/0,1 Torr gehen 402 Teile Anthranilsäure-2'-dimethylaminoethylester über.

23,6 Teile Anthranilsäure-2'-dimethylaminoethylester werden in einem Gemisch aus 125 Teilen Wasser, 125 Teilen Eisessig und 50 Teilen konz. Salzsäure gelöst und nach dem Abkühlen auf 5 °C mit 34,5 Tl. einer 23 %igen wäßrigen Lösung von Natriumnitrit tropfenweise versetzt. Nach drei Stunden wird überschüssiges Nitrit durch Zugabe von Amidosulfonsäure zerstört.

14,4 Teile 2-Naphthol werden in 50 Teilen 2 N-Natronlauge und 150 Teilen Wasser warm gelöst und bei Raumtemperatur zur Diazoniumsalzlösung gegeben. Zur Kupplung wird mit Ammoniakwasser pH = 4 eingestellt. Nach dem Rühren über Nacht wird abgesaugt, mit Wasser gewaschen und gut abgepreßt. Nach der Trocknung im Wärmeschrank erhält man 21 Teile hellrotes Pulver. Der Farbstoff läßt sich mit Eisessig und Wasser zu einer stabilen 20 %igen Flüssigeinstellung auflösen. Er färbt Papierstoff brillant orange. Das Abwasser ist nur schwach gefärbt. Die gefärbten Papiere lassen sich durch Hydrosulfit bleichen. Die Verbindung entspricht der Formel

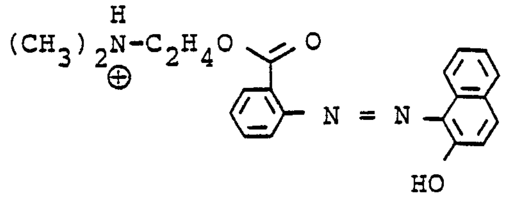

$CH_3COO^{\ominus}$

Analog dem beschriebenen Verfahren lassen sich weitere Farbstoffe herstellen, die im Farbton und der Affinität zu Papierstoff weitgehend dem Beispiel 1 entsprechen.

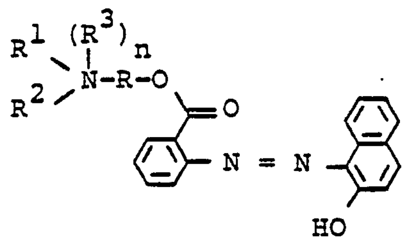

| Beispiel Nr. | $-R-NR^1R^2$ |
| --- | --- |
| 2 | $-C_2H_4N(CH_3)_2$ |
| 3 | $-C_2H_4N(C_2H_5)_2$ |
| 4 | $-C_2H_4N(C_3H_7)_2$ |
| 5 | $-C_2H_4N\left(CH\begin{matrix}CH_3\\CH_3\end{matrix}\right)_2$ |
| 6 | $-C_2H_4N(C_4H_9)_2$ |
| 7 | $-C_2H_4N(CH_2\underset{CH_3}{CH}-CH_3)_2$ |
| 8 | $-C_2H_4N(\underset{CH_3}{CH}-C_2H_5)_2$ |
| 9 | $-C_2H_4NHCH_3$ |
| 10 | $-C_2H_4NHC_2H_5$ |
| 11 | $-C_2H_4N(CH_2)_5$ |
| 12 | $-C_2H_4N(CH_2)_6$ |
| 13 | 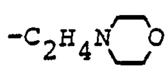 |

(Fortsetzung)

| Beispiel | $-R-NR^1R^2$ |
|---|---|
| 14 | $-C_2H_4$ 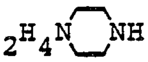 |
| 15 | $-C_2H_4$ 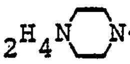 $-CH_3$ |
| 16 | $-C_2H_4$ 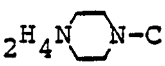 $-C_2H_5$ |
| 17 | $-C_2H_4NH$ 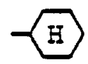 |
| 18 | $-C_2H_4$ 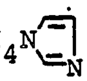 |
| 19 | $-C_2H_4N(C_2H_4OCH_3)_2$ |
| 20 | $-C_2H_4N(C_2H_4OC_2H_5)_2$ |
| 21 | $-CH(CH_3)-CH_2-N(CH_3)_2$ |
| 22 | $-CH(CH_3)-CH_2-N(C_2H_5)_2$ |
| 23 | $-CH(CH_3)-CH_2-N(C_3H_7)_2$ |
| 24 | $-CH(CH_3)-CH_2-N(CH(CH_3)-CH_3)_2$ |
| 25 | $-CH(CH_3)-CH_2-N(C_4H_9)_2$ |
| 26 | $-CH(CH_3)-CH_2-N(CH_2-CH(CH_3)-CH_3)_2$ |
| 27 | $-CH(CH_3)-CH_2-N(CH(CH_3)CH_2CH_2)_2$ |
| 28 | $-CH(CH_3)-CH_2NHCH_3$ |

(Fortsetzung)

| Beispiel Nr. | $-R-NR^1R^2$ |
|---|---|
| 29 | $-\underset{\vert \atop CH_3}{CH}-CH_2-NHC_2H_5$ |
| 30 | 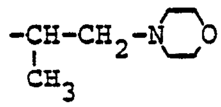 |
| 31 | 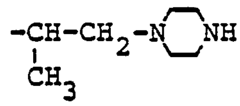 |
| 32 | 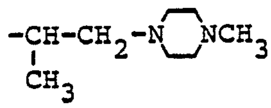 |
| 33 | 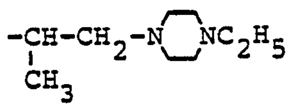 |
| 34 | 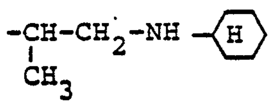 |
| 35 | 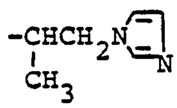 |
| 36 | $-\underset{\vert \atop CH_3}{CH}-CH_2N(C_2H_4OCH_3)_2$ |
| 37 | $-C_3H_6N(CH_3)_2$ |
| 38 | $-C_3H_6N(C_2H_5)_2$ |
| 39 | 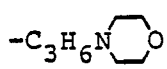 |
| 40 | 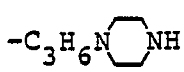 |
| 41 | 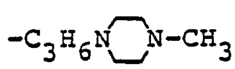 |
| 42 | $-CH_2\underset{\vert \atop C_2H_5}{CH}-N(CH_3)_2$ |

(Fortsetzung)

| Beispiel Nr. | $-R-NR^1R^2$ |
|---|---|
| 43 | $-CH_2CH-N(C_2H_5)_2$<br>$C_2H_5$ |
| 44 | $-CH_2CH-N(C_3H_6)_2$<br>$C_2H_5$ |
| 45 | 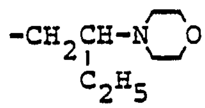 |
| 46 | 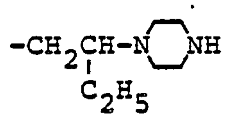 |
| 47 | 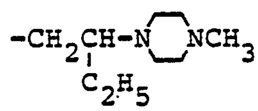 |
| 48 | $-C_4H_8-N(CH_3)_2$ |
| 49 | $-C_4H_8-N(C_2H_5)_2$ |
| 50 | $-C_4H_8-N(C_3H_6)_2$ |
| 51 | 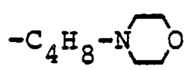 |
| 52 | 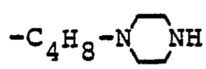 |
| 53 | 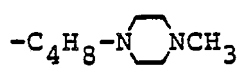 |

Analog Beispiel 1 lassen sich aus den entsprechenden halogenierten bzw. sulfochlorierten Derivaten des Isatosäureanhydrids weitere Farbstoffe herstellen, die Papier brillant orange färben.

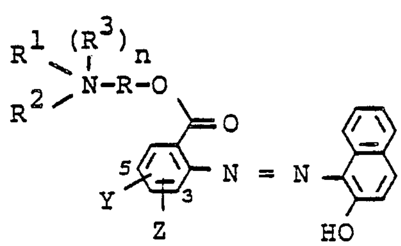

(Siehe Tabelle Seite 9 f.)

| Bsp. Nr. | 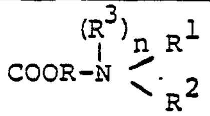 | Y | Z |
|---|---|---|---|
| 54 | $COOC_2H_4N(CH_3)_2$ | 5-Cl | H |
| 55 | $COOC_2H_4$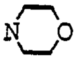 | 5-Cl | H |
| 56 | $COOC_2H_4N(CH_3)_2$ | 5-Br | H |
| 57 | $COOC_2H_4$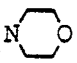 | 5-Br | H |
| 58 | $COOC_2H_4N(CH_3)_2$ | 3-Cl | 5-Br |
| 59 | $COOC_2H_4N(CH_3)_2$ | 5-Br | 3-Cl |
| 60. | $COOC_2H_4N(CH_3)_2$ | H | $5-SO_2OC_2H_4N(CH_3)_2$ |

Beispiel 61

Diazokomponente : 187,2.Teile 5-Nitroisatosäureanhydrid werden bei 60 °C in ein Gemisch aus 600 Teilen Dioxan und 85 Teilen N,N-Dimethylethanolamin eingetragen. Nach Ende der Gasentwicklung kühlt man auf Raumtemperatur ab, filtriert und rührt das Filtrat in viel Wasser ein. Der Niederschlag wird abgesaugt und getrocknet. Die Ausbeute beträgt 125 Teile. Nach Umkristallisation aus wäßrigem Ethanol ergibt die Elementaranalyse in Prozent $C_{11}H_{15}O_4N_3$

ber. C 52,2 H 6,0 O 25,3 N 16,6
gef. C 51,6 H 5,6 O 26,5 N 16,3

Das Diazotierungsäquivalent beträgt 261 g/val (theor. 253 g/val).

Diazotierung und Kupplung auf β-Naphthol analog Beispiel 1 ergibt einen Farbstoff, der aus wäßrigessigsaurer Lösung Papierstoff rot anfärbt. In saurer Lösung entspricht die Verbindung der Formel

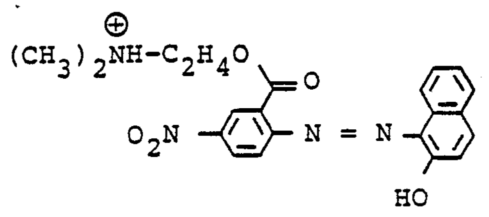

$CH_3COO^{\ominus}$

Die nachfolgenden roten Farbstoffe lassen sich analog Beispiel 61 unter Verwendung anderer Aminoalkohole herstellen.

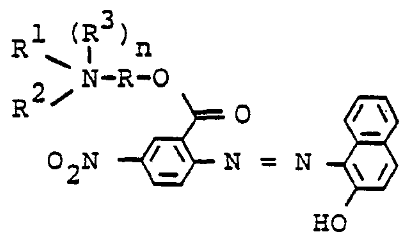

| Beispiel Nr. | 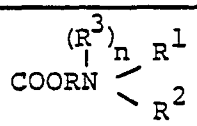 |
|---|---|
| 62 | 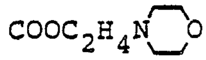 |
| 63 | $COOC_2H_4N(C_2H_5)_2$ |
| 64 | 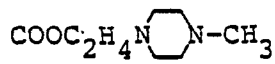 |

Beispiel 65

Herstellung der Diazokomponente : Nach Beispiel 1 hergestellte Diazokomponente wird destilliert. 21 Teile werden in 100 Teilen Toluol tropfenweise bei 60 °C mit 13 g Dimethylsulfat versetzt. Man rührt eine Stunde bei dieser Temperatur nach, kühlt auf Raumtemperatur und saugt den Niederschlag ab. Nach Trocknung beträgt das Diazotierungsäquivalent 355 g/val (Theorie 334 g/val). Die Verbindung entspricht der Formel

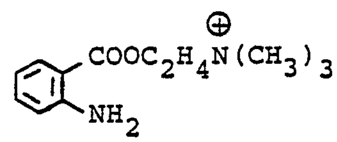

$CH_3OSO_3^{\ominus}$

Nach Diazotierung und Kupplung analog Beispiel 1 stellt man mit Natronlauge alkalisch, dekantiert die wäßrige Phase vom schmierigen Farbstoff und löst in wäßrigem Eisessig. Der Farbstoff färbt Papierstoff brillant orange bei mäßiger Abwasseranfärbung und entspricht nun der Formel

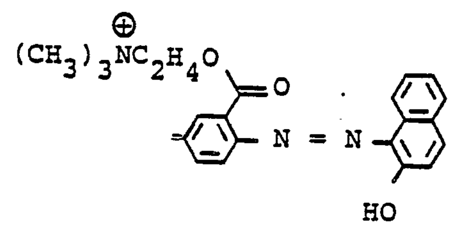

$CH_3COO^{\ominus}$

Beispiel 66

Einer Suspension von 50 Teilen gebleichtem Sulfatzellstoff von ca. 30° SR in 2 000 Teilen Wasser bei pH 7 werden 2 Teile einer 10-proz. essigsauren Lösung des Farbstoffs aus Beispiel 1 zugegeben. Das Gemisch wird 15 Minuten bei 20 bis 25 °C gerührt und dann mit Wasser auf 0,2 % Feststoffgehalt verdünnt. Mit dieser Suspension werden auf einem Laborblattbildner Papierblätter hergestellt und die Blätter 5 Minuten bei 100 °C getrocknet. Man erhält orange gefärbte Blätter. Das Abwasser ist mäßig gefärbt, die Ausblutechtheit gegen Wasser, wäßrige Sodalösung und Essigsäure gut. Verwendet man statt gebleichtem Zellstoff holzhaltigen Zellstoff, so ist das Abwasser nur noch schwach gefärbt bei guten bis sehr guten Ausblutechtheiten.

Verwendung der Farbstoffe aus Beispiel 2 bis 65 erbringt ähnlich gute Färbeergebnisse.

Beispiel 67

In eine gerührte Suspension aus 100 Teilen eines Gemisches von 70 % gebleichtem Kiefernsulfatzellstoff und 30 % gebleichtem Birkensulfatzellstoff mit ca. 30° SR im Gesamtstoff in 2 000 Teilen Wasser werden 1,0 Teile des Vermahlungsproduktes aus 90 % Farbstoff nach Beispiel 1 und 10 % Amidosulfonsäure eingestreut und 10 Minuten verrührt. Nach Verdünnung mit Wasser auf 0,2 % Feststoffgehalt werden auf einem Laborblattbildner Papierblätter hergestellt und die Blätter 5 Minuten bei 100 °C getrocknet. Man erhält gleichmäßig orange gefärbte Blätter mit guter Ausblutechtheit gegen Wasser.

Verwendung von Vermahlungsprodukten der Farbstoffe aus Beispiel 2 bis 65 mit Amidosulfonsäure erbringt ähnlich gute Färbeergebnisse.

Beispiel 68

Eine saugfähige Papierbahn aus ungeleimtem Papier wird bei 40 bis 50 °C durch eine Farbstofflösung gezogen, die sich zusammensetzt aus 0,5 Teilen Farbstoff aus Beispiel 1, 0,5 Teilen Stärke, 3 Teilen Essigsäure und 96 Teilen Wasser. Die überschüssige Farbstofflösung wird zwischen zwei Walzen abgepreßt. Die getrocknete Papierbahn ist orange gefärbt.

**Patentansprüche**

1. Verbindungen der allgemeinen Formel I

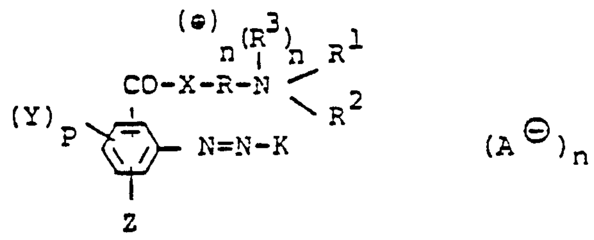

in der

Y Wasserstoff, Chlor, Brom oder Nitro,

Z Wasserstoff, Chlor, Brom, Sulfonsäureester oder gegebenenfalls substituiertes Sulfamoyl,

X —O— oder

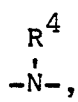

R gegebenenfalls durch Sauerstoff oder

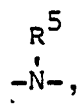

unterbrochenes Alkylen,

n die Zahlen 0 oder 1,

p die Zahlen 1 oder 2,

$R^1$ und $R^2$ unabhängig voneinander Wasserstoff, gegebenenfalls substituiertes Alkyl, Alkenyl, Cycloalkyl, Aralkyl oder Aryl oder

$R^1$ und $R^2$ zusammen mit dem Stickstoff einen Heterocyclus,

$R^3$ Wasserstoff oder gegebenenfalls substituiertes Alkyl,

K der Rest einer Kupplungskomponente der Naphtholreihe und

$A^{\ominus}$ ein Anion sind, wobei

$R^4$ gegebenenfalls substituiertes Alkyl und

$R^5$ Wasserstoff oder $C_1$- bis $C_4$-Alkyl sind und der Rest

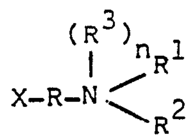

auch einen gegebenenfalls substituierten Piperazinrest bedeutet.

2. Verbindungen gemäß Anspruch 1 der Formel

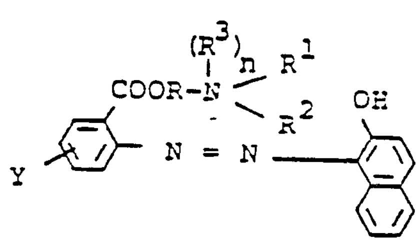

,

in der R bis $R^3$ und Y die angegebene Bedeutung haben.

3. Verwendung der Verbindungen gemäß Anspruch 1 zum Färben und/oder Bedrucken sauer modifizierter Fasern, von Leder, Papier oder Karton.

4. Verwendung der Verbindungen gemäß Anspruch 1 in Tinten oder Druckfarben.

**Claims**

1. A compound of the general formula I

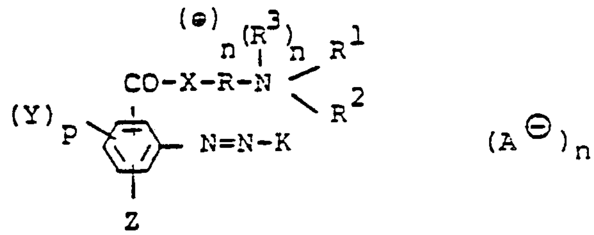

where

Y is hydrogen, chlorine, bromine or nitro,

Z is hydrogen, chlorine, bromine, a sulfonic acid ester group or unsubstituted or substituted sulfamyl,

X is —O— or

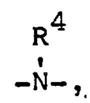

R is alkylene which may or may not be interrupted by oxygen or

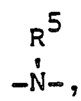

n is 0 or 1,

p is 1 or 2,

$R^1$ and $R^2$ independently of one another are hydrogen, unsubstituted or substitued alkyl, alkenyl, cycloalkyl, aralkyl or aryl, or

$R^1$ and $R^2$ together with the nitrogen form a heterocyclic structure,

$R^3$ is hydrogen or unsubstituted or substituted alkyl,

K is a radical of a coupling component of the naphthol series, and

$A^{\ominus}$ is an anion,

$R^4$ being unsubstituted or substituted alkyl, and

$R^5$ being hydrogen or $C_1$-$C_4$-alkyl, and the radical

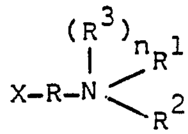

may furthermore be an unsubstituted or substituted piperazine radical.

2. A compound as claimed in claim 1, of the formula

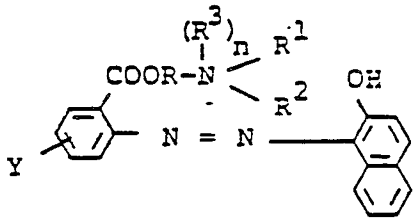

where R, $R^1$, $R^2$, $R^3$ and Y have the stated meanings.

3. The use of a compound as claimed in claim 1 for dyeing and/or printing acid-modified fibers, leather, paper or cardboard.

4. The use of a compound as claimed in claim 1 in inks or printing inks.

**Revendications**

1. Composés de formule générale I

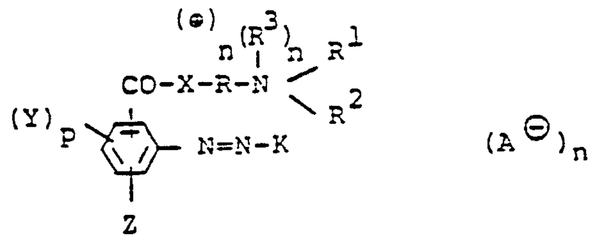

dans laquelle

Y est un atome d'hydrogène, de chlore, de brome ou un groupement nitro,

Z est un atome d'hydrogène, de chlore, de brome, un groupement ester d'acide sulfonique ou sulfamoyle éventuellement substitué,

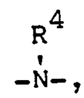

X est mis pour —O— ou

R représente un radical alkylène éventuellement interrompu par un atome d'oxygène ou un groupement

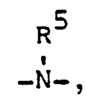

n représente le nombre 0 ou 1,

p représente le nombre 1 ou 2,

$R^1$ et $R^2$, indépendamment l'un de l'autre, représentent chacun un atome d'hydrogène, un radical alkyle éventuellement substitué, alcényle, cycloalkyle, aralkyle ou aryle ou

$R^1$ et $R^2$ forment ensemble, avec l'atome d'azote, un hétérocycle

$R^3$ représente un atome d'hydrogène ou un radical alkyle éventuellement substitué,

K est le radical d'un composant de copulation de la série naphténique,

$A^{\ominus}$ est un anion,

$R^4$ étant un radical alkyle éventuellement substitué et

$R^5$ représentant un atome d'hydrogène ou un radical alkyle en $C_1$-$C_4$, et le radical

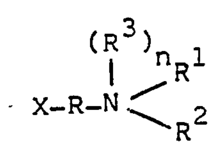

représentant également un radical pipérazine éventuellement substitué.

2. Composés selon la revendication 1 de formule

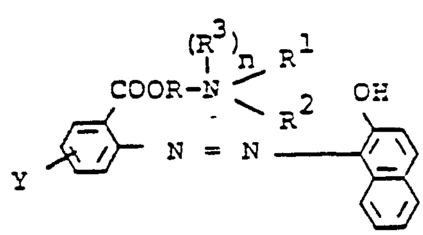

dans laquelle R à $R^3$ et Y ont les significations indiquées.

3. Utilisation des composés selon la revendication 1 pour la teinture et/ou l'impression de fibres modifiées par acidification, de cuir, de papier ou de carton.

4. Utilisation des composés selon la revendication 1 dans des encres ou des encres d'imprimerie.